# EUROPÄISCHE PATENTSCHRIFT

(11) **EP 1 072 346 B1**
(45) Veröffentlichungstag und Bekanntmachung des Hinweises auf die Patenterteilung: **07.09.2005**
(21) Anmeldenummer: 00810607.2
(22) Anmeldetag: 11.07.2000
(51) Int. Cl.: B23B 51/00

(54) **Bohrwerkzeug**
Drilling tool
Outil de forage

(30) Priorität: 22.07.1999 DE 19934430
(43) Veröffentlichungstag der Anmeldung: 31.01.2001
(73) Patentinhaber: HILTI Aktiengesellschaft, 9494 Schaan (LI)
(72) Erfinder: Kaibach, Werner, 86807 Buchloe (DE); Raber, Stefan, 86916 Kaufering (DE)
(74) Vertreter: Wildi, Roland

(56) Entgegenhaltungen:
- EP-A- 0 094 070
- DE-A- 3 143 462
- US-A- 4 964 476

## Beschreibung

Die Erfindung betrifft ein Bohrwerkzeug zur Herstellung von Hinterschneidungen in zylindrischen Bohrlöchern gemäss dem Oberbegriff des Patentanspruchs 1.

Für Befestigungen, die hohen Zugbelastungen ausgesetzt sind, und insbesondere für sicherheitsrelevante Befestigungen kommen vielfach formschlüssige Verankerungen zum Einsatz. Durch den Formschluss werden Spreizkräfte bei Belastung weitgehend vermieden. Dadurch können geringere Achs- und Randabstände als bei konventionellen Spreizankern eingehalten werden. Bei formschlüssigen Verankerungen kommen Hinterschnittanker zum Einsatz, die üblicherweise eine Ankerstange mit einem sich in Setzrichtung erweiternden Kopfteil und eine über die Ankerstange geschobene, axial verschiebbare Hülse aufweisen. An ihrem, dem Kopfteil zugewandten Ende ist die Hülse mit einer Reihe von Spreizlappen versehen, die beim Auftreiben der Hülse auf das Kopfteil radial in eine in einem Bohrloch vorbereitete Hinterschneidung ausstellbar sind, wobei der Formschluss erstellt wird.

Zur Herstellung der Hinterschneidung in dem vorbereiteten, im wesentlichen zylindrischen Bohrloch in Stein oder Beton ist beispielsweise aus der DE-C-31 43 462 ein Bohrwerkzeug bekannt, bei dem ein Bohrer einen Schaft aufweist, dessen eines Längsende mit einem Einsteckende für die Werkzeugaufnahme einer Handbohrmaschine versehen ist und dessen gegenüberliegendes Längsende einen Schneidkopf mit abrasiven Schneidkörpern trägt. Der Bohrer ist über ein Schwenklager in einer Hülse gelagert, die einen radialen Bund zur Abstützung am Rand des Bohrlochs aufweist. Das Schwenklager ist von einem radial umlaufenden Vorsprung gebildet, der im axialen Abstand vom Bund von der Innenwandung der Hülse abragt. Beim Hinterschneidevorgang führt der Bohrer in der Hülse eine rührerartige Bewegung auf. Durch die abrasiven Schneidkörper am Schneidkopf des Bohrers wird der abgebaute Untergrund zu mehr oder weniger feinen Partikeln und Bruchstücken zerkleinert. Bei der Erstellung von Hinterschneidungen in horizontalen Bohrlöchern oder bei Überkopfanwendungen können die abgebauten Partikel und Bruchstücke in die Hülse des Bohrwerkzeugs gelangen und das Verschwenken des Bohrers behindern. Dadurch kann die Erstellung des Hinterschnitts erschwert werden oder sogar gänzlich unmöglich sein.

Aufgabe der vorliegenden Erfindung ist es daher, ein Bohrwerkzeug für die Herstellung von Hinterschneidungen zu schaffen, welches den Nachteilen der Werkzeuge des Stands der Technik abhilft. Das Bohrwerkzeug soll einfach und zuverlässig in der Anwendung sein.

Die Lösung dieser Aufgaben besteht in einem Bohrwerkzeug mit den im Patentanspruch 1 angeführten Merkmalen. Bevorzugte Ausführungsvarianten und/oder vorteilhafte Weiterbildungen der Erfindung sind Gegenstand der abhängigen Patentansprüche. Das erfindungsgemässe Bohrwerkzeug zur Herstellung von Hinterschneidungen in zylindrischen Bohrlöchern in Stein oder Beton umfasst einen Bohrer, der einen Schaft aufweist, dessen eines Längsende mit einem Einsteckende für die Werkzeugaufnahme einer Handbohrmaschine versehen ist und dessen gegenüberliegendes Längsende einen Schneidkopf mit abrasiven Schneidkörpern trägt. Der Bohrer ist in einem Schwenklager gehalten, das innerhalb einer mit einer Durchgangsbohrung versehenen Hülse angeordnet ist, die an einem dem Einsteckende des Bohrers zugewandten Abschnitt einen radialen Bund aufweist. Ein, sich vom Schwenklager in Richtung des Schneidkopfes erstreckender, Vorderabschnitt der Hülse weist wenigstens eine Öffnung auf, deren axialer Abstand vom Schwenklager etwa 0,05 x D bis etwa 0,6 x D, vorzugsweise 0,2 x D bis 0,4 x D, beträgt, wobei D den Aussendurchmesser der Hülse im Bereich des Schwenklagers bezeichnet.

Durch die gewählte Anordnung der wenigstens einen Öffnung ist sichergestellt, dass keine Bohrpartikel bzw. kein Bohrmehl in den Bereich des Schwenklagers kommen. Die bei waagrechten und Überkopfanwendungen in die Hülse fallenden Bohrpartikel können durch die wenigstens eine Öffnung wieder herausfallen. Dadurch kann sich die Hülse nicht mehr derart mit Betonpartikeln füllen, dass der Hinterschneidprozess behindert wird. An der Innenwandung der Hülse anhaftendes Bohrmehl kann durch Klopfen gelöst und durch die wenigstens eine Öffnung ausgeleert werden. Das Werkzeug ist einfach im Aufbau und unterscheidet sich in seiner prinzipiellen, selbsterklärenden Funktion nur unwesentlich von den bekannten Geräten. Dadurch besteht für den Anwender auch keine Notwendigkeit, sich mit einer neuen Arbeitsweise vertraut zu machen.

Mit Vorteil erstreckt sich die wenigstens eine Öffnung über eine axiale Länge der Hülse, die grösser ist als die Breite der Öffnung in Umfangsrichtung der Hülse. Dabei gilt für die axiale Länge 0,05 x L ≤ l ≤ 0,5 x L, vorzugsweise 0,1 x L ≤ l ≤ 0,4 x L. Für die Breite der Öffnung gilt 0,1 x D ≤ b ≤ 0,7 x D, vorzugsweise 0,2 x D ≤ b ≤ 0,5 x D. In den Beziehungen steht L für die Arbeitslänge des Bohrwerkzeugs, die durch den Abstand vom radialen Bund zum schneidkopfseitigen Längsende der Hülse definiert ist, und D für den Aussendurchmesser der Hülse im Bereich des Schwenklagers. Bei den gewählten Grössenverhältnissen ist eine zuverlässige Abfuhr der im Einsatz erzeugten Betonpartikel aus der Hülse gewährleistet.

In einer Variante der Erfindung sind mehrere Öffnungen axial hintereinander angeordnet. Die Öffnungen erstrecken sich dabei über eine axiale Länge der Hülse, die grösser ist als die Breite der Öffnungen in Umfangsrichtung der Hülse. Für die axiale Länge gilt 0,05 x L ≤ l ≤ 0,5 x L, vorzugsweise 0,1 x L ≤ l ≤ 0,4 x L, wobei L für die Arbeitslänge des Bohrwerkzeugs steht, die durch den Abstand vom radialen Bund zum schneidkopfseitigen Längsende der Hülse definiert ist. Für die Breite der Öffnungen gilt 0,1 x D ≤ b ≤ 0,7 x D, vorzugsweise 0,2 x D ≤ b ≤ 0,5 x D, wobei D den Aussendurchmesser der Hülse bezeichnet.

Zur weiteren Verbesserung der Abfuhr der Bohrpartikel sind über den Umfang der Hülse mehrere Öffnungen verteilt. Die Öffnungen können alle die gleiche Form aufweisen. Mit vorteil besitzen die Öffnungen unterschiedliche Geometrien, um den unterschiedlichen Grössen der Bohrpartikel und des Bohrmehls Rechnung zu tragen.

Die Abfuhr der Bohrpartikel kann noch dadurch weiter verbessert werden, dass die dem Schwenklager nähere Begrenzungsfläche jeder Öffnung gefast ist. Dadurch werden die Bohrpartikel, vom Schwenklager weg, nach aussen geleitet.

Im folgenden wird die Erfindung unter Bezugnahme auf in den Fig. dargestellte Ausführungsbeispiele näher erläutert. Es zeigen in nicht massstabsgetreuer, schematischer Dastellung:
- Fig. 1: ein erstes Ausführungsbeispiel des erfindungsgemässen Bohrwerkzeugs;
- Fig. 2: das Bohrwerkzeug aus Fig. 1 mit axial geschnittener Hülse; und
- Fig. 3: ein zweites Ausführungsbeispiel des Bohrwerkzeugs.

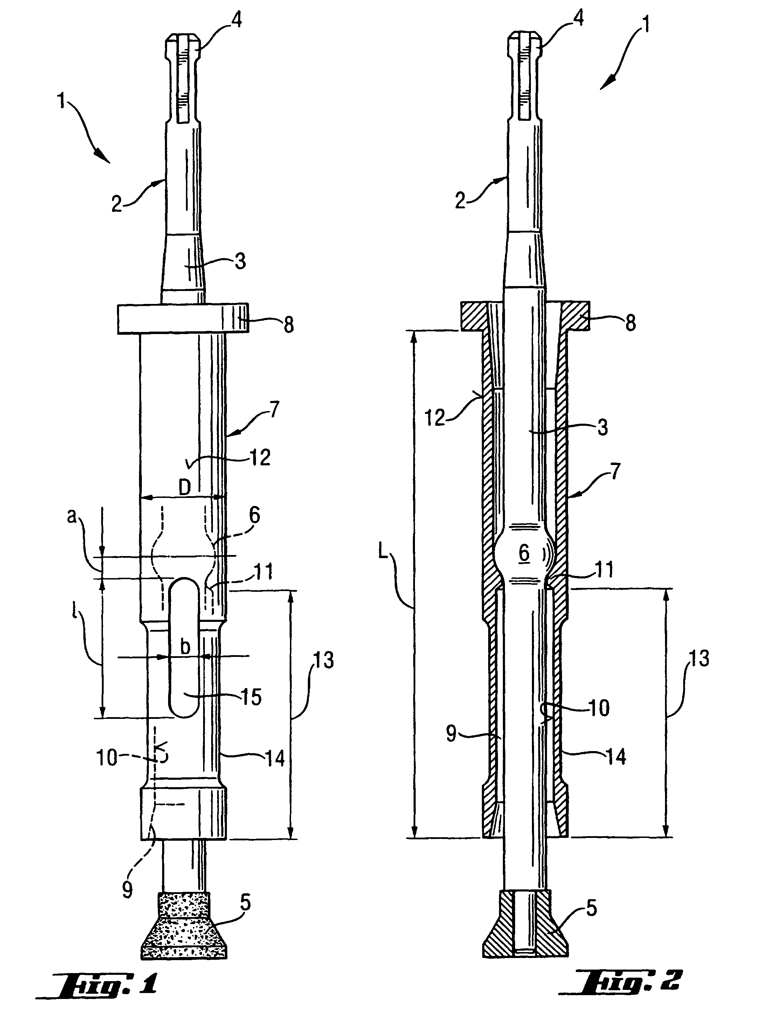

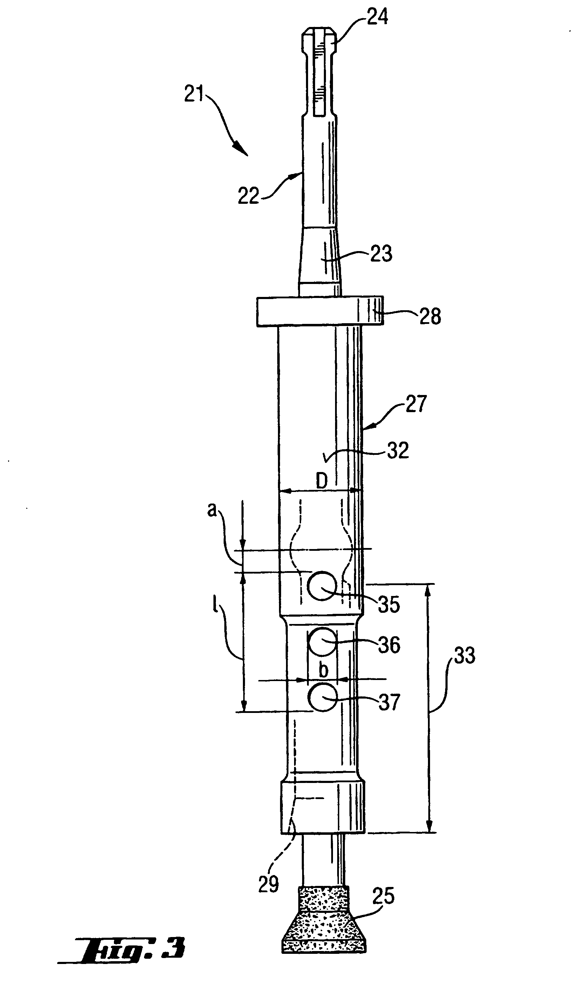

Ein erstes Ausführungsbeispiel des erfindungsgemässen Bohrwerkzeugs ist in Fig. 1 und 2 jeweils gesamthaft mit dem Bezugszeichen 1 versehen. Das Bohrwerkzeug 1 umfasst einen Bohrer 2, dessen Schaft 3 an seinem einen Längsende ein Einsteckende 4 für die Werkzeugaufnahme eines Drehbohrgeräts aufweist. Am gegenüberliegenden Ende ist ein Schneidkopf 5 angeordnet, der mit abrasiven Schneidkörpern versehen ist. Die abrasiven Schneidkörper können beispielsweise Schneiden aus Hartmetall oder eine Beschichtung mit abrasiven Partikeln aus Hartmetall und/oder Diamant sein. Der Bohrer 2 ist durch die axiale Durchgangsbohrung 9 einer im wesentlichen zylindrischen Hülse 7 geführt und stützt sich über einen verdickten Schaftbereich 6 in einem Schwenklager 11 ab. Das Schwenklager 11 ist als ringförmiger Vorsprung ausgebildet, der von der Innenwandung 10 der Hülse 7 abragt. Die Hülse 7 ist an ihrem dem Einsteckende zugewandten Endbereich mit einem umlaufenden Bund 8 versehen, der zur Abstützung der in ein Bohrloch gesteckten Hülse 7 am Untergrund dient. Die axiale Erstreckung von der Auflagefläche bis zum schneidkopfseitigen Ende der Hülse 7 wird als Arbeitslänge L bezeichnet. Ein Vorderabschnitt 13 der Hülse 7, der sich vom Schwenklager 11 bis zum schneidkopfseitigen Ende der Hülse 7 erstreckt, weist eine Taillierung 14 der Aussenfläche 12 auf, die dem nicht immer exakt zylindrischen Verlauf des Bohrlochs Rechnung trägt.

Gemäss der Erfindung ist im Vorderabschnitt 13 der Hülse 14 wenigstens eine Öffnung 15 vorgesehen. Die Öffnung 15 endet im Bereich des Schwenklagers 11 und weist von diesem einen axialen Abstand a auf, der etwa 0,05 x D bis etwa 0,6 x D, vorzugsweise 0,2 x D bis 0,4 x D, beträgt, wobei D den Aussendurchmesser der Hülse 7 im Bereich des Schwenklagers 11 bezeichnet. Die Öffnung 15 erstreckt sich über einen axialen Bereich l des Vorderabschnitts 13, für dessen Beziehung zur Arbeitslänge L der Hülse 7 gilt 0,05 x L ≤ l ≤ 0,5 x L, vorzugsweise 0,1 x L ≤ l ≤ 0,4 x L. Die Öffnung besitzt eine in Umfangsrichtung der Hülse 7 gemessene Breite b, die kleiner ist als die axiale Länge l des Erstreckungsbereichs der Öffnung 15 im Vorderabschitt 13. Für die Breite b der Hülse gilt 0,1 x D ≤ b ≤ 0,7 x D, vorzugsweise 0,2 x D ≤ b ≤ 0,5. Dabei bezeichnet D den Aussendurchmesser der Hülse 7 im Bereich des Schwenklagers 11.

Das in Fig. 3 dargestellte zweite Ausführungsbeispiel der Erfindung trägt gesamthaft das Bezugszeichen 21. Das dargestellte Ausführungsbeispiel entspricht weitgehend dem Bohrwerkzeug 1 aus Fig. 1 und 2. Entsprechend sind Komponenten und Bestandteile des Bohrwerkzeugs 21, die mit den Komponenten und Bestandteilen des Ausführungsbeispiels aus Fig. 1 und 2 übereinstimmen, mit Bezugszeichen versehen, die jeweils um 20 grösser sind. Der Bohrer, dessen Schaft, die Hülse usw. tragen somit die Bezugszeichen 22, 23, 27 usw. Gemäss dem zweiten Ausführungsbeispiel der Erfindung sind im Vorderabschnitt 33 der Hülse 27 mehrere Öffnungen 35, 36, 37 axial hintereinander angeordnet. Die Öffnungen 35, 36, 37 sind dabei in einem axialen Ersteckungsbereich L des Vorderabschnitts 33 der Hülse 27 angeordnet, für den gilt 0,05 x L ≤ l ≤ 0,5 x L, vorzugsweise 0,1 x L ≤ l ≤ 0,4 x L. Jede einzelne Öffnung 35, 36, 37 besitzt eine Breite b, die kleiner ist als der axiale Erstreckungsbereich L und für die gilt 0,1 x D ≤ b ≤ 0,7 x D, vorzugsweise 0,2 x D ≤ b ≤ 0,5.

Die Erfindung ist am Beispiel von Bohrwerkzeugen erläutert worden, deren Hülsen wenigstens eine axial verlaufende Öffnung bzw. Anordnung von Öffnungen aufweisen. Es versteht sich, dass über den Umfang der Hülsen auch noch weitere Öffnungen vorgesehen sein können. Die Öffnungen können dabei auch unterschiedliche Formen aufweisen. Vorzugsweise weisen die Öffnungen an ihren dem Schwenklager näher liegenden Begrenzungsflächen Anfasungen auf, die zur besseren Abfuhr der Bohrpartikel dienen.

## Patentansprüche

1. Bohrwerkzeug zur Herstellung von Hinterschneidungen in zylindrischen Bohrlöchern in Stein oder Beton, mit einem Bohrer (2; 22), der einen Schaft (3; 23) aufweist, dessen eines Längsende mit einem Einsteckende (4; 24) für die Werkzeugaufnahme einer Handbohrmaschine versehen ist und dessen gegenüberliegendes Längsende einen Schneidkopf (5; 25) mit abrasiven Schneidkörpern trägt, und einer mit einer Durchgangsbohrung (9; 29) versehenen Hülse (7; 27), die an einem, dem Einsteckende zugewandten Abschnitt einen radialen Bund (8; 28) aufweist und zur Aufnahme des Bohrers (2; 22) dient, der in einem innerhalb der Hülse (7; 27) angeordneten Schwenklager (11) gelagert ist, **dadurch gekennzeichnet, dass** ein sich vom Schwenklager (11) in Richtung des Schneidkopfes (5; 25) erstreckender Vorderabschnitt (13; 33) der Hülse (7; 27) wenigstens eine Öffnung (15; 35, 36, 37) aufweist, deren axialer Abstand (a) vom Schwenklager (11) etwa 0,05 x D bis etwa 0,6 x D, vorzugsweise 0,2 x D bis 0,4 x D, beträgt, wobei D den Aussendurchmesser der Hülse (7) im Bereich des Schwenklagers (11) bezeichnet.

2. Bohrwerkzeug nach Anspruch 1, **dadurch gekennzeichnet, dass** sich die Öffnung (15) über eine axiale Länge (l) der Hülse (7) erstreckt, die grösser ist als eine Breite (b) der Öffnung (15) in Umfangsrichtung der Hülse (7), wobei für die axiale Länge (l) gilt 0,05 x L ≤ l ≤ 0,5 x L, vorzugsweise 0,1 x L ≤ l ≤ 0,4 x L und für die Breite (b) der Öffnung gilt 0,1 x D ≤ b ≤ 0,7 x D, vorzugsweise 0,2 x D ≤ b ≤ 0,5 x D und L für die Arbeitslänge des Bohrwerkzeugs (1) steht, die durch den Abstand vom radialen Bund (8) zum schneidkopfseitigen Längsende der Hülse (7) definiert ist, sowie D den Aussendurchmesser der Hülse (7) im Bereich des Schwenklagers (11) bezeichnet.

3. Bohrwerkzeug nach Anspruch 1, **dadurch gekennzeichnet, dass** mehrere Öffnungen (35, 36, 37) axial hintereinander angeordnet sind, wobei die Öffnungen (35, 36, 37) sich über eine axiale Länge (l) der Hülse (27) erstrecken, die grösser ist als eine Breite (b) der Öffnungen (35, 36, 37) in Umfangsrichtung der Hülse (27), wobei für die axiale Länge (I) gilt 0,05 x L ≤ l ≤ 0,5 x L, vorzugsweise 0,1 x L ≤ l ≤ 0,4 x L und für die Breite (b) der Öffnungen (35, 36, 37) gilt 0,1 x D ≤ b ≤ 0,7 x D, vorzugsweise 0,2 x D ≤ b ≤ 0,5 x D und L für die Arbeitslänge des Bohrwerkzeugs (21) steht, die durch den Abstand vom radialen Bund (28) zum schneidkopfseitigen Längsende der Hülse (27) definiert ist, sowie D den Aussendurchmesser der Hülse (27) im Bereich des Schwenklagers (11) bezeichnet.

4. Bohrwerkzeug nach einem der vorangehenden Ansprüche, **dadurch gekennzeichnet, dass** über den Umfang der Hülse mehrere Öffnungen verteilt sind.

5. Bohrwerkzeug nach Anspruch 4, **dadurch gekennzeichnet, dass** die Öffnungen unterschiedliche Geometrien aufweisen.

6. Bohrwerkzeug nach einem der vorangehenden Ansprüche, **dadurch gekennzeichnet, dass** die dem Schwenklager (11) nähere Begrenzungsfläche jeder Öffnung (15; 35, 36, 37) gefast ist.

## Claims

1. Drilling tool for making undercuts in cylindrical bore holes in stone or concrete, with a drill (2; 22) which has a shaft (3; 23) whose one longitudinal end is provided with an insertion end (4; 24) for tool accommodation in a hand drilling machine and whose opposing longitudinal end bears a cutting head (5; 25) with abrasive cutting bodies, and a sleeve (7; 27) provided with a through bore (9; 29), said sleeve having a radial collar (8; 28) on a section facing towards the insertion end and serving to accommodate the drill (2; 22), which is supported in a pivot bearing (11) arranged within the sleeve (7; 27), **characterised in that** a front section (13; 33) of the sleeve (7; 27) extending from the pivot bearing (11) in the direction of the cutting head (5; 25) has at least one opening (15; 35, 36, 37) whose axial separation (a) from the pivot bearing (11) is in the range of approximately 0.05 x D to approximately 0.6 x D, and preferably 0.2 x D to 0.4 x D, where D denotes the external diameter of the sleeve (7) in the region of the pivot bearing (11).

2. Drilling tool according to claim 1, **characterised in that** the opening (15) extends over an axial length (1) of the sleeve (7) that is greater than a width (b) of the opening (15) in the circumferential direction of the sleeve (7), whereby for the axial length (l) the relation 0.05 x L ≤ l ≤ 0.5 x L applies, and preferably 0.1 x L ≤ l ≤ 0.4 x L, and for the width (b) of the opening the relation 0.1 x D ≤ b ≤ 0.7 x D applies, and preferably 0.2 x D ≤ b ≤ 0.5 x D, where L stands for the working length of the drilling tool (1), which is defined as the distance from the radial collar (8) to the longitudinal end of the sleeve (7) towards the cutting head, and D denotes the external diameter of the sleeve (7) in the region of the pivot bearing (11).

3. Drilling tool according to claim 1, **characterised in that** a plurality of openings (35, 36, 37) are arranged axially one behind the other, whereby the openings (35, 36, 37) extend over an axial length (l) of the sleeve (27) that is greater than a width (b) of the openings (35, 36, 37) in the circumferential direction of the sleeve (27), whereby for the axial length (l), the relation 0.05 x L ≤ l ≤ 0.5 x L applies, and preferably 0.1 x L ≤ l ≤ 0.4 x L and, for the width (b) of the openings (35, 36, 37), the relation 0.1 x D ≤ b ≤ 0.7 x D applies, and preferably 0.2 x D ≤ b ≤ 0.5 x D, where L stands for the working length of the drilling tool (21), which is defined as the distance from the radial collar (28) to the longitudinal end of the sleeve (27) towards the cutting head, and D denotes the external diameter of the sleeve (27) in the region of the pivot bearing (11).

4. Drilling tool according to one of the previous claims, **characterised in that** a plurality of openings are distributed over the circumference of the sleeve.

5. Drilling tool according to claim 4, **characterised in that** the openings have differing geometries.

6. Drilling tool according to one of the previous claims, **characterised in that** the bounding surface of each opening (15; 35, 36, 37) closer to the pivot bearing (11) is bevelled.

## Revendications

1. Outil de forage pour la réalisation de contre-dépouilles dans des trous forés cylindriques dans de la pierre ou du béton, avec un foret (2 ; 22) qui comporte une tige (3 ; 23) dont une des extrémités longitudinales est pourvue d'une extrémité insérable (4 ; 24) pour le mandrin d'outil d'un perforateur à main et dont l'extrémité longitudinale opposée porte une tête de coupe (5 ; 25) avec des corps de coupe abrasifs, et avec un manchon (7 ; 27) qui est pourvu d'un trou débouchant (9 ; 29) et qui, dans une portion tournée vers l'extrémité insérable, comporte un collet radial (8 ; 28) et sert à recevoir le foret (2 ; 22), lequel est monté sur un palier de pivotement (11) disposé à l'intérieur du manchon (7 ; 27), **caractérisé en ce qu'**une portion avant (13 ; 33) du manchon (7 ; 27) s'étendant à partir du palier de pivotement (11) en direction de la tête de coupe (5 ; 25) est pourvue d'au moins une ouverture (15 ; 35, 36, 37) dont la distance axiale (a) au palier de pivotement (11) est égale à environ 0,05 x D à environ 0,6 x D, de préférence à 0,2 x D à 0,4 x D, D désignant le diamètre extérieur du manchon (7) dans la zone du palier de pivotement (11).

2. Outil de forage selon la revendication 1, **caractérisé en ce que** l'ouverture (15) s'étend sur une longueur axiale (l) du manchon (7) qui est supérieure à la largeur (b) de l'ouverture (15) dans la direction circonférentielle du manchon (7), la longueur axiale (1) étant de 0,05 x L ≤ l ≤ 0,5 x L, de préférence de 0,1 x L ≤ l ≤ 0,4 x L, et la largeur (b) de l'ouverture étant de 0,1 x D ≤ b ≤ 0,7 x D, de préférence de 0,2 x D ≤ b ≤ 0,5 x D, et L désignant la longueur de travail de l'outil de forage (1), laquelle est définie par la distance du collet radial (8) à l'extrémité longitudinale, côté tête de coupe, du manchon (7) et D désignant le diamètre extérieur du manchon (7) dans la zone du palier de pivotement (11).

3. Outil de forage selon la revendication 1, **caractérisé en ce que** plusieurs ouvertures (35, 36, 37) sont disposées axialement les unes derrière les autres, les ouvertures (35, 36, 37) s'étendant sur une longueur axiale (l) du manchon (27) qui est supérieure à la largeur (b) des ouvertures (35, 36, 37) dans la direction circonférentielle du manchon (27), la longueur axiale (1) étant de 0,05 x L ≤ l ≤ 0,5 x L, de préférence de 0,1 x L ≤ l ≤ 0,4 x L, et la largeur (b) des ouvertures (35, 36, 37) étant de 0,1 x D ≤ b ≤ 0,7 x D, de préférence de 0,2 x D ≤ b ≤ 0,5 x D, et L désignant la longueur de travail de l'outil de forage (21), laquelle est définie par la distance du collet radial (28) à l'extrémité longitudinale, côté tête de coupe, du manchon (27) et D désignant le diamètre extérieur du manchon (27) dans la zone du palier de pivotement (11).

4. Outil de forage selon une des revendications précédentes, **caractérisé en ce que** plusieurs ouvertures sont réparties sur la circonférence du manchon.

5. Outil de forage selon la revendication 4, **caractérisé en ce que** les ouvertures présentent des géométries différentes.

6. Outil de forage selon une des revendications précédentes, **caractérisé en ce que** la surface de délimitation, proche du palier de pivotement (11), de chaque ouverture (15 ; 35, 36, 37) est biseautée.
